# EUROPÄISCHE PATENTSCHRIFT

(11) **EP 0 492 096 B1**
(45) Veröffentlichungstag und Bekanntmachung des Hinweises auf die Patenterteilung: **06.03.1996**
(21) Anmeldenummer: 91118885.2
(22) Anmeldetag: 06.11.1991
(51) Int. Cl.: B65G 13/02, B65G 47/29

(54) **Förderbahn zum staudruckfreien Transport runder oder rundähnlicher Teile**
Conveyor path for transporting round or similarly shaped parts without compression
Chemin de transport pour transporter sans compression des parts ronds ou pareils

(30) Priorität: 22.12.1990 DE 4041591
(43) Veröffentlichungstag der Anmeldung: 01.07.1992
(73) Patentinhaber: BLEICHERT FÖRDERANLAGEN GmbH, D-74706 Osterburken (DE)
(72) Erfinder: O'Brien, Mike, Richmond, MI 48062 (US)
(74) Vertreter: Rüger, Rudolf, Dr.-Ing.

(56) Entgegenhaltungen:
- DD-A- 142 867
- US-A- 3 904 020
- US-A- 4 433 776

## Beschreibung

Die Erfindung betrifft eine Förderbahn zum staudruckfreien Transport runder oder rundähnlicher Teile mit wenigstens einem Antriebsmittel.

Zur Verkettung von Maschinen und Anlagen zur Bearbeitung runder oder rundähnlicher Teile, z.B. Kurbelwellen, Nockenwellen und dergleichen, sind Fördereinrichtungen zum Transport dieser Teile zwischen den verschiedenen Maschinen angeordnet. Die zu transportierenden Teile müssen darauf ohne Beschädigungen und in definierter Lage von einer Maschine zur anderen befördert werden. Dazu sind in der Praxis verschiedene Transporteinrichtungen in Gebrauch von denen an erster Stelle der Hubbalkenförderer genannt sei. Hubbalkenföderer bestehen im wesentlichen aus einem Gerüst, auf dem die zu transportierenden runden oder rundähnlichen Teile quer aufliegen. Durch eine Antriebseinrichtung werden längs zur Transportrichtung angeordnete Hubbalken in einer Art Kreisbewegung derart angetrieben, daß die Hubbalken bei ihrer Aufwärtsbewegung die quer aufliegenden runden oder rundähnlichen Teile von dem ruhenden Gerüst abheben, diese sodann ein Stück in Bewegungsrichtung transportieren, und sie nachfolgend wieder auf dem Gerüst ablegen. Wenn nicht besondere Vorkehrungen getroffen werden, laufen die Teile am Ende der Transportbahn aufeinander auf und reiben aneinander. Auch kann es zwischen den Teilen zu einem erheblichen Staudruck kommen, was Beschädigungen zur Folge haben kann.

Ähnliche Nachteile treten auch bei Rollenbahnen auf, wie sie bspw. aus der DE-A-31 48 176 bekannt sind, bei denen die Rollenwellen Förderrollen tragen und von einer gemeinsamen Antriebswelle angetrieben sind. Jeder Rollenwelle ist eine Rutschkupplung zugeordnet, die bewirkt, daß bei einen Materialstau auf der Rollenbahn die von dem Stau betroffenen Rollenwellen zum Stillstand kommen. In diesem Fall erzeugt jede stillstehende Rollenwelle einen bestimmten Staudruck zwischen den aufeinader aufgelaufenen und sich berührenden Teilen, wobei es zu Beschädigungen dieser Teile kommen kann.

Zum Transport von runden oder rundähnlichen Teilen ohne gegenseitige Berührung, werden auch Kettenförderer mit Taschen eingesetzt. Bei diesen sind an Transportketten spezielle Taschen ausgebildet, in die die zu transportierenden Teile einzulegen sind. Die Transportketten werden entweder kontinuierlich oder in Schritten bewegt, wobei die in die Taschen eingelegten Teile bis zur Entnahme in den Taschen liegenbleiben. Der Transport der Teile erfolgt staudrucklos und ohne Berührung der Teile untereinander. Ein gravierender Nachteil dieser Kettenförderer besteht aber darin, daß die Teile in einem vorgegebenen Takt in die Taschen eingesetzt werden müssen. Ein Kettenförderer verfügt über keine lückenschließende Funktion.

Wenn die Aufgabe der Teile in unregelmäßigen Abständen erfolgt, entstehen Lücken im Teilefluß, die über der Länge des Kettenförderers erhalten bleiben und nicht geschlossen werden.

Gleichartige Nachteile treten auch bei einem aus der DE-A-2 009 438 bekannten Kühlbett für stabförmiges Walzgut auf. Bei diesem Kühlbett sind in einer waagerechten Ebene parallel zueinander mehrere Wellen angeordnet, auf denen kreisförmige Scheiben drehfest sitzen, die an ihrem Umfang offene Taschen zur Aufnahme des Walzgutes aufweisen. Die Wellen werden von einem gemeinsamen Antrieb taktweise phasengleich angetrieben, derart daß am Ende des Taktes die Taschen der Scheibengruppen benachbarter Wellen in der Ebene der Wellen einander gegenüber zu liegen kommen. Dann wird das Walzgut mit einer Förderkette aus den Taschen der einen Scheibengruppe zu den Taschen der in Transportrichtung nächsten Scheibengruppe befördert, worauf die Scheiben wieder einen Schritt weiter gedreht werden. Diese Vorrichtung ist wegen des taktweisen immer phasengleichen Betriebes nicht in der Lage, Lücken im Teilefluß zu schließen.

Ferner ist aus der US-A-3 904 020 ein Zählapparat für stabförmige Teile bekannt, bei dem Zählgut über eine Warenbahn zugeführt, vereinzelt und anschließend an einen Zählmechanismus weitergegeben wird. Der Vereinzelungsmechanismus weist ein Zufuhrrad und ein Zählrad auf, die beide auf ihrem Umfang Ausnehmungen tragen, welche einzelne Teile des Zählgutes aufnehmen. Zufuhrrad und Zählrad werden von einem Antrieb schrittweise und abwechselnd angetrieben. Das Zufuhrrad nimmt das Zählgut Stück für Stück auf und gibt gleichzeitig ein bereits vorher aufgenommenes Teil an das stillstehende Zählrad weiter. Nun steht das Zufuhrrad still und das Zählrad bewegt sich einen Schritt weiter und gibt ein anderes, früher aufgenommenes Teil an den Zählmechanismus ab. Dieser Zählapparat ist daher nicht geeignet, Teile so zu befördern, daß dabei Lücken in dem Teilfluß geschlossen werden, worauf es beim Zählen auch nicht ankommt.

Aufgabe der Erfindung ist es deshalb, eine Förderbahn zu schaffen, die den Transport von runden oder rundähnlichen Teilen ohne Berührung der Teile untereinander mit lückenschließender Funktion, jedoch staudruckfrei ermöglicht.

Diese Aufgabe wird erfindungsgemäß durch die Förderbahn mit den Merkmalen des Patentanspruchs 1 gelöst.

Die Förderbahn zum staudruckfreien Transport runder oder rundähnlicher Teile weist Transportscheiben mit Ausnehmungen an den äußeren Umfangsflächen auf, die längs der Förderbahn sich gegenseitig überlappend angeordnet sind. Die Transportscheiben sind drehmomentbegrenzt gruppenweise gleichsinnig angetrieben. Jeweils zwei Transportscheiben sind koaxial fluchtend nebeneinander angeordnet und bilden ein Scheibenpaar. Die quer auf diese Bahn aufgebrachten Teile werden durch die Drehung der Scheibenpaare von Scheibenpaar zu Scheibenpaar weitergeben und entlang der Förderbahn befördert. Die Teile stehen nur mit den Transportscheiben der Förderbahn in Kontakt; gegenseitig berühren sie sich nicht.

Die Förderbahn ist ohne Schwierigkeiten für den Transport verschiedener Teile einsetzbar bzw. anpaßbar und zeichnet sich durch eine einfache, robuste Ausführung aus, die wirtschaftlich zu fertigen ist.

Die Förderbahn besitzt selbsttätig lückenschließende Eigenschaften. Wird eine Förderscheibe angehalten, laufen die in Transportrichtung weiter hinten liegenden Scheiben so lange, bis jeweils ein weiteres Teil herangeführt worden ist. Die gesamte Förderbahn kommt erst zum Stehen, wenn alle Teilepositionen aufgefüllt sind. Es können die runden oder rundähnlichen Teile deshalb auch in unregelmäßiger Folge auf die Förderbahn aufgegeben werden.

Auch bei vollbesetzter Förderbahn wird kein Staudruck auf die Teile ausgeübt, da sich diese nicht berühren. Die auf ein Teil ausgeübte Kraft hängt nur von dem einstellbaren maximalen Drehmoment ab, das auf die einzelne Transportscheibe, in deren Ausnehmung das betreffende Teil liegt, übertragen wird. Folglich werden die Teile sehr schonend transportiert.

Wegen der symmetrischen Ausbildung der Ausnehmungen in den Förderscheiben ist die Förderrichtung nicht vorbestimmt. Sie hängt nur von der Drehrichtung der Förderscheiben ab und kann bei Bedarf gewechselt werden.

Durch Anhalten eines einzigen Transportscheibenpaares wird der an diesen Scheiben ankommende Teilefluß gestaut. Die in Transportrichtung weiter vorn liegenden Teile laufen jedoch ungehindert weiter. Somit ist ohne zusätzlichen Aufwand die Unterteilbarkeit der Förderbahn in Teilabschnitte gegeben.

Insbesondere wird mit der Erfindung eine Förderbahn geschaffen, die auch für den Transport auf Kurven ausgebildet werden kann. Dazu kann die Anordnung derart getroffen werden, daß paarweise jeweils eine große und eine kleine Transportscheibe auf einer gemeinsamen Welle angeordnet sind, wobei die Wellen nichtparallel sind und sich ungefähr im Kurvenmittelpunkt schneiden. Dabei ist die größere Transportscheibe auf der kurvenäußeren und die kleinere Transportscheibe auf der kurveninneren Seite angeordnet. Die Kurven können in verschiedenen Radien und Winkel-Abbiegungen hergestellt werden.

Die Förderbahn kann erforderlichenfalls durch entsprechende Nachrüstung einer herkömmlichen Friktions - oder Staurollenbahn mit Transportscheiben auf einfachste Weise ausgebildet werden. Darüberhinaus ist durch die Verstellung des Abstandes der paarweise angeordneten Transportscheiben oder bedarfsweise durch Austauschen der Transportscheiben ein hohes Maß an Anpassungsfähigkeit an verschiedene Teileabmessungen gegeben.

Ausgestaltungen der Förderbahn sind Gegenstände von Unteransprüchen.

In der Zeichnung sind Ausführungsbeispiele des Gegenstandes der Erfindung dargestellt. Es zeigen:
- Fig. 1: eine erfindungsgemäße Förderbahn mit außenliegender Kupplung in einer Vorderansicht,
- Fig. 2: die Förderbahn nach Fig. 1 in einer Draufsicht,
- Fig. 3: einen Ausschnitt aus einer erfindungsgemäße Förderbahn und die Ausbildung der Transportscheiben in einer Seitenansicht,
- Fig. 4: ein Ausführungsbeispiel der Erfindung mit innenliegender Kupplung und einem zu transportierenden Teil in einer Vorderansicht,
- Fig. 5: einen Ausschnitt aus einer kurvengängigen Förderbahn in einer Draufsicht und
- Fig. 6: eine kurvengängige Förderbahn in einer Vorderansicht.

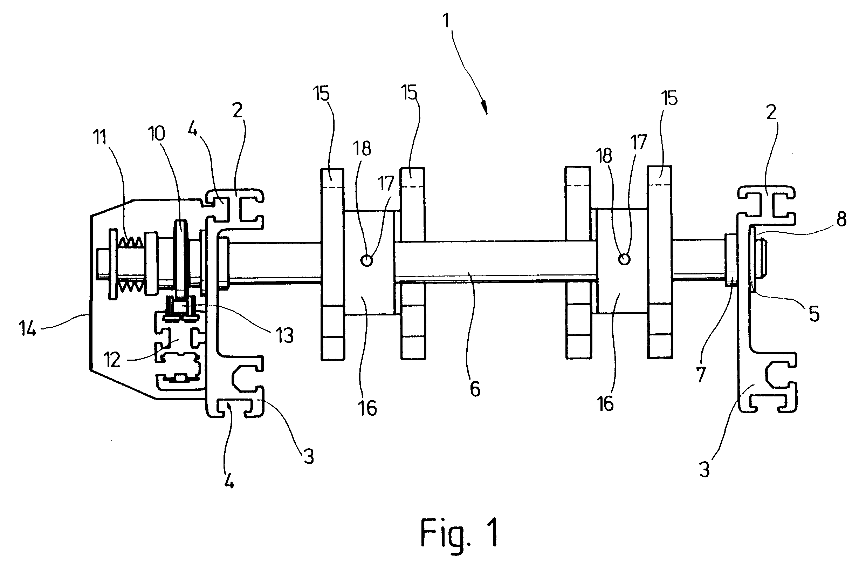

Die Fig. 1 zeigt ein Ausführungsbeispiel einer erfindungsgemäßen Förderbahn 1, die beidseitig durch parallel angeordnete längs verlaufende Schienen 2 begrenzt ist. Die Schienen 2 sind auf einem nicht dargestellten Gestell montiert und bilden mit diesem ein Förderbahngerüst 3. Die Schienen 2 bestehen aus einem ungefähr C-förmigen stranggepreßten Profil, das zur Befestigung weiterer möglicher Aufbauten, die im einzelnen nicht dargestellt sind, an allen Seiten mit T-Nuten 4 versehen ist. Die Schienen 2 sind biegesteif und verleihen der Förderbahn 1 insbesondere zur Überwindung größerer Stützabstände eine ausreichende Festigkeit. In etwa gleichen Abständen voneinander sind an den Schienen 2 sich gegenüberliegende und miteinander fluchtende Lager 5 vorgesehen, die in der Regel als wartungsfreie Wälzlager ausgebildet sind. Mittels der sich jeweils gegenüberliegenden Lager 5 sind Wellen 6 in dem Förderbahngerüst 3 drehbar gelagert. In axialer Richtung ist jede der Wellen 6 einenends durch einen Bund 7 und eine Sicherungsscheibe 8 gegen Verschiebung gesichert. Auf dem anderen Ende jeder Welle 6 sind an der Außenseite der Schiene 2 liegend ein auf der Welle 6 drehbar gelagertes Kettenrad 10 und eine verstellbare Rutschkupplung 11 angeordnet. Die Rutschkupplung 11 kuppelt das Kettenrad 10 mit der Welle 6. Die Kettenräder 10 aller Wellen 6 stehen mit einer durch Führungsstücke 12 geführten Rollenkette 13 in Eingriff. Sowohl zum Schutz gegen Verschmutzung als auch zur Vermeidung von Verletzungsgefahr ist eine in die in der Schiene 2 eingeformten T-Nuten 4 eingreifende Abdeckung 14 vorgesehen, die die Rutschkupplungen 11 und die Kettenräder 10 nach außen abdeckt.

Auf den in dem Förderbahngerüst 3 gelagerten Wellen 6 sind jeweils zwei Transportscheiben 15 in einem Abstand voneinander angeordnet und mit den Wellen 6 drehstarr verbunden. Die einander zugeordneten Transportscheiben 15 bilden ein Transportscheibenpaar 15p. Jede Transportscheibe 15 weist eine Nabe 16 auf, die mit einer radialen Bohrung 17 versehen ist. Bspw. mittels eines eingesteckten Stiftes 18 ist die Transportscheibe 15 auf der Welle 6 befestigt.

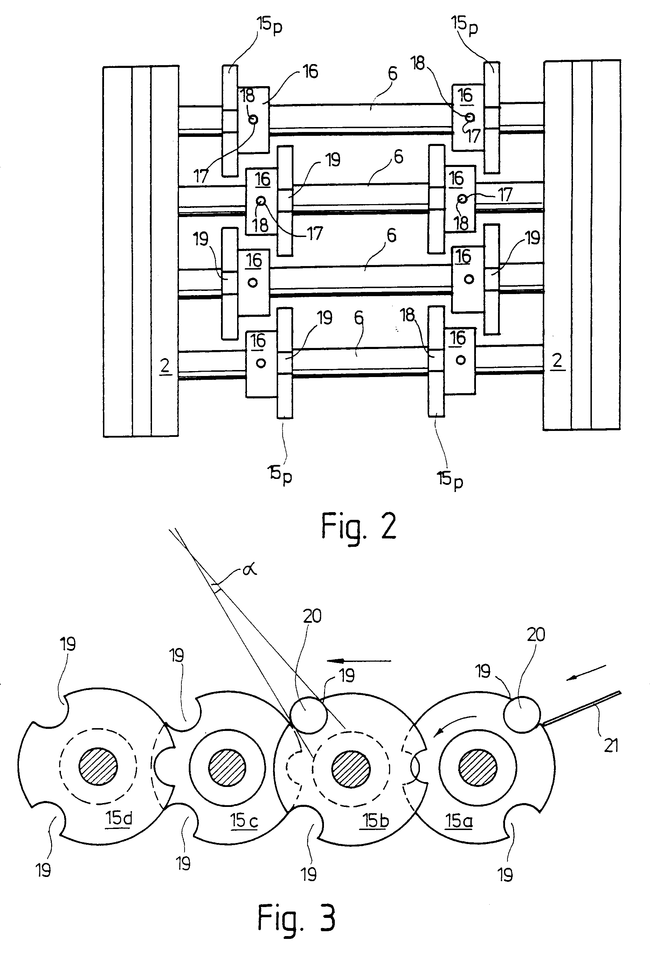

In Fig. 3 ist ein Ausschnitt aus der Förderbahn 1 mit vier hintereinander angeordneten Transportscheiben 15a ... 15d in einer Prinzipdarstellung gezeigt. Jede Transportscheibe 15a ... 15d weist an ihrer äußeren Umfangsfläche jeweils drei etwa halbkreisförmige Ausnehmungen 19 auf. Da der Abstand der Drehachsen der Transportscheiben 15 untereinander etwas geringer ist als der Durchmesser der Transportscheiben 15, überlappen sich die Transportscheiben 15 gegenseitig, so daß die im Bereich zwischen den Transportscheiben 15 befindlichen Ausnehmungen 19 von der jeweils benachbarten Transportscheibe 15 abgedeckt sind. Durch die in der Fig. 3 nicht dargestellte aus der Rollenkette 13 und den Kettenrädern 10 gebildete Antriebseinrichtung sind die Transportscheiben 15 zumindest gruppenweise in gleichem Sinn angetrieben. Die Positionen und die Abstände der Transportscheiben 15 sind, wie aus Fig. 2 ersichtlich, so festgelegt, daß sich die Transportscheiben 15 benachbarter Wellen 6 nicht berühren. Dazu sind die Abstände der paarweise einander zugeordneten Transportscheiben 15 der Transportscheibenpaare 15p auf den Wellen 6 derart festgelegt, daß sich entlang der Förderbahn 1 Transportscheibenpaare 15p mit kleinen und mit größeren Abständen abwechseln. Die Abstände sind so getroffen, daß das Transportscheibenpaar 15p mit dem kleineren Abstand zwischen den Transportscheiben 15 des Transportscheibenpaares 15p mit dem größeren Abstand angeordnet werden kann ohne daß sich die Transportscheiben 15 gegenseitig berühren. Die Wellen mit den Transportscheiben 15a ... 15d sind entlang der Förderbahn 1 in durch die Anordnung der Lager 5 in den Schienen 2 vorgegebenen ungefähr gleichen Abständen voneinander angeordnet.

Die insoweit beschriebene Förderbahn arbeitet wie folgt:
Über die Rollenkette 13, die Kettenräder 10 und die Rutschkupplungen 11 werden alle Wellen 6 gleichsinnig angetrieben. Wenn sich noch keine zu transportierenden Teile 20 auf der Förderbahn 1 befinden, drehen sich alle Transportscheiben 15 mit gleicher Drehzahl. Die beiden Transportscheiben 15 auf einer Welle 6 sind als Transportscheibenpaar 15p starr miteinander verbunden.

Über eine Zuführung 21 gelangen in unregelmäßiger Folge Teile 20 an die Förderbahn 1. Das zuerst ankommende Teil 20 legt sich dabei zunächst an die äußere Umfangsfläche der unmittelbar an der Zuführung befindlichen sich drehenden ersten Transportscheiben 15a an. Das von der Antriebseinrichtung über die Rutschkupplung 11 auf die ersten Transportscheiben 15a übertragenen Drehmoment ist groß genug, daß die Reibung zwischen der äußeren Umfangsfläche der Transportscheiben 15a und dem Teil 20 sicher überwunden wird. Wenn eine der Ausnehmungen 19 der ersten Transportscheiben 15a an der Zuführung 21 ankommt, rollt das Teil 20 in deren Ausnehmungen 19 ein. Im weiteren Verlauf der Bewegung nehmen die ersten Transportscheiben 15a das Teil 20 mit, bis es sich an die Umfangsflächen der nächstfolgenden zweiten Transportscheiben 15b anlegt. Die Umfangsflächen der zweiten Transportscheiben 15b und die Hinterflanken der Ausnehmungen 19 der ersten Transportscheiben 15a bilden einen Keilwinkel, der nach unten geöffnet und mit α bezeichnet ist. Dadurch wird das Teil 20 fest in die Ausnehmungen 19 der ersten Transportscheiben 15a gehalten und blockiert diese. Das Drehmoment übersteigt den von der Rutschkupplung 11 der ersten Transportscheiben 15a übertragbaren maximalen Wert, und die Rutschkupplung 11 schlüpft durch. Wenn die Förderbahn 1, wie anfangs angenommen, leer ist, drehen sich die zweiten Transportscheiben 15b, an deren Umfangsflächen das Teil anliegt, ungehindert. Sobald eine der Ausnehmungen 19 an der Stelle, an dem das Teil 20 an den zweiten Transportscheiben 15b anliegt, angelangt ist, rollt das Teil 20 in diese Ausnehmungen 19 ein. Die zweiten Transportscheiben 15b heben das Teil 20 aus den Ausnehmungen 19 der ersten Transportscheiben 15a heraus und drehen sich zusammen mit dem Teil 20 weiter. Die erste Transportscheiben 15a sind somit freigegeben und sie beginnen sich erneut zu drehen. Inzwischen langt das Teil 20 infolge der Drehbewegung der zweiten Transportscheiben 15b an den Umfangsflächen der nächsten, der dritten Transportscheiben 15c an. Hier wiederholt sich nun der vorstehend beschriebene Vorgang in gleicher Weise. Auf diese Weise wird ein Teil 20 in der durch den Drehsinn der Transportscheiben 15 vorgegebener Transportrichtung auf der Förderbahn 1 fortbewegt.

Sollten von der Zuführung 21 mehr Teile 20 zugeführt werden, als von den ersten Transportscheiben 15a abgenommen werden, bleiben die Teile 20 zunächst auf der Zuführung 21 liegen. Von dieser werden sie in dem von der Drehzahl der ersten Transportscheiben 15a vorgegebenen Takt abgenommen. Sie werden auf diese Weise in definierter Lage und in gleichmäßigen Abständen voneinander in der oben beschriebenen Weise weitertransportiert, ohne sich gegenseitig zu berühren, zu stauen oder zu reiben.

Wenn ein auf der Abnahmeseite der Förderbahn 1 ankommendes Teil 20 nicht abgenommen wird, bleibt es in seinen Ausnehmungen 19 liegen und blockiert damit die betreffende Transportscheiben 15. Die letzten, im Ausführungsbeispiel die vierten Transportscheiben 15d bleiben stehen, und die ihnen zugeordnete Rutschkupplung 11 schlüpft durch. Sobald die vorletzten, dritten Transportscheiben 15c ein Teil 20 heranführen, und dieses die Umfangsflächen der vierten Transportscheiben 15d berührt, werden auch diese blockiert. Alle anderen entgegen der Transportrichtung liegenden Transportscheiben 15a ... 15c bleiben ebenfalls dann stehen, wenn sie mit einem zu transportierenden Teil 20 an ihrer jeweils nachfolgenden Transportscheibe 15 anstoßen. Dieses Stillsetzen der Transportscheiben setzt sich entgegen der Transportrichtung fort, bis sie von einem inzwischen herangeführtem Teil 20 blockiert sind. Auf diese Weise werden Lücken im Förderfluß automatisch geschlossen. Die Teile 20 liegen alle in Anschlagposition und blockieren jeweils die Transportscheiben 15, in deren Ausnehmungen 19 sie liegen.

Zum Anhalten der gesamten Förderbahn 1 brauchen lediglich die letzten Transportscheiben 15d angehalten und an diesen auch nur ein dem übertragbaren maximalen Drehmoment der ihnen zugeordneten Rutschkupplung 11 entsprechendes Bremsmoment aufgebracht zu werden. Dessen Größe ist unabhängig von der Länge der Förderbahn 1. Das Bremsmoment wird dann an jeder Transportscheibe 15 von dem in einer der Ausnehmungen 19 liegenden Teil 20 aufgebracht.

Wird eine beliebige Transportscheibe 15 der Förderbahn 1 angehalten, laufen die in Transportrichtung vorn liegenden Teile 20 weiter, und das Teil 20, das an der gestoppten Transportscheibe 15 ankommt, bleibt liegen. Dieser Vorgang setzt sich entgegen der Transportrichtung der Förderbahn 1 fort, so daß die ankommenden Teile 20 aufgestaut werden. Dadurch, daß jede Transportscheibe 15 willkürlich angehalten werden kann, um die ankommenden Teile 20 zu stauen, läßt sich die gesamte Förderbahn 1 in Teilabschnitte unterteilen.

Da die Ausnehmungen 19 in den Transportscheiben 15 eine gleichartig ausgebildete Vorder - und Hinterflanke aufweisen und auch keine anderweitigen Unsymmetrien vorhanden sind, arbeitet die Förderbahn 1 reversierbar, d.h. die Transportrichtung der Förderbahn 1 hängt ausschließlich von dem Drehsinn der gruppenweise angetriebenen Transportscheiben 15 ab. Bei entsprechender Auslegung der Antriebseinrichtung kann die in Abschnitte unterteilte Förderbahn 1 in ihren verschiedenen Abschnitten auch in entgegengesetzten Richtungen fördern, falls dies in einem speziellen Anwendungsfall erforderlich sein sollte.

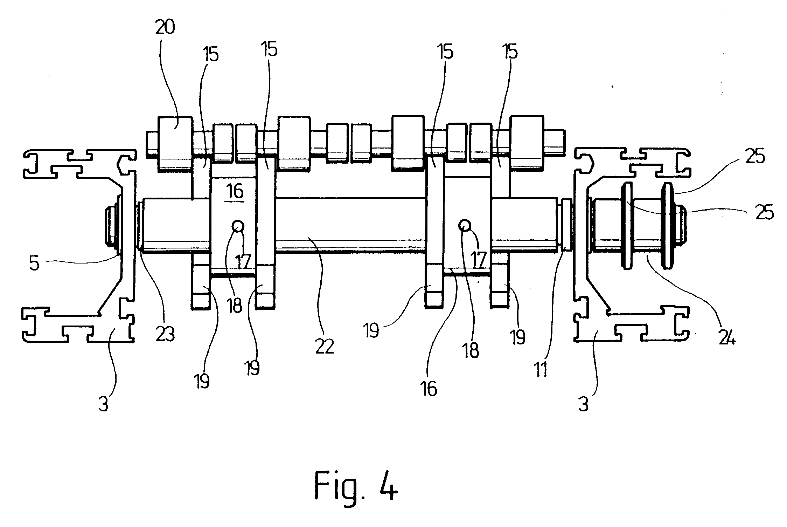

In Fig. 4 ist eine Ausführungsform mit innenliegender Rutschkupplung 11 dargestellt. Die Transportscheiben 15 sind zueinander in der oben beschriebenen Weise gemäß dem in Fig. 2 dargestellten Ausführungsbeispiel ausgebildet und angeordnet. Im Unterschied dazu ist aber die Welle 6 in der Art einer an sich bekannten Friktions - oder Staurolle ausgebildet. Diese weist eine Hohlwelle 22 auf, die mit einer zentrisch durchgehenden und in dem Förderbahngerüst 3 gelagerten Antriebswelle 23 über die Rutschkupplung 11 verbunden ist. Die Rutschkupplung ist an einem Ende der Hohlwelle 22 angeordnet und von oberhalb der Förderbahn 1 aus in ihrem Drehmoment einstellbar. Die Antriebswellen 23 sind an ihren einen Ende bei 24 mit mit einer in der Fig. 4 nicht dargestellten Rollenkette in Eingriff stehenden Kettenrädern 25 versehen. Die Arbeitsweise der Transportscheiben 15 dieses Ausführungsbeispiels ist identisch mit der des vorstehend beschriebenen Ausführungsbeispiels. Wie bereits bei dem vorigen Ausführungsbeispiel, erfolgt auch bei diesem der Transport der runden oder rundähnlichen Teile 20 staudrucklos und ohne Berührung der Teile 20 untereinander, wobei etwaige Lücken im Teilefluß geschlossen werden. Diese Ausführungsform kann auf einfache Weise erhalten werden, indem eine Staurollenbahn nachträglich mit Transportscheiben 15 ausgerüstet wird.

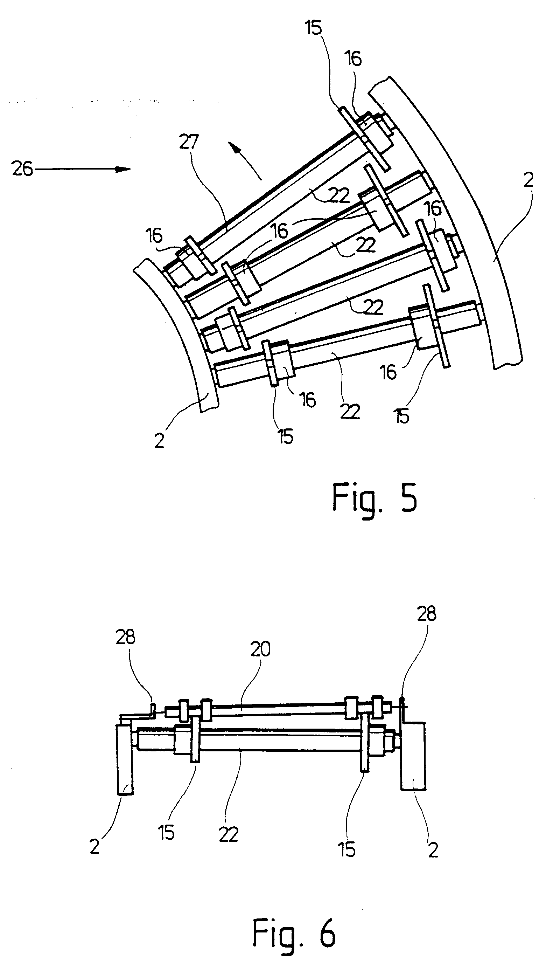

Die Figuren 5 und 6 zeigen ein kurvengängiges Ausführungsbeispiel der Förderbahn. In Anlehnung an das Ausführungbeispiel nach Fig. 4 ist eine Standart-Staurollenbahnkurve 26 mit Transportscheiben 15 versehen. Die paarweise einander zugeordneten und miteinander axial fluchtenden Transportscheiben 15 weisen einen unterschiedlichen Durchmesser auf. Dabei ist die kurvenaußen liegende Transportscheibe 15 jeweils größer als die kurveninnere, derart, daß die Überlappungen der Transportscheiben 15 innen und außen etwa gleich groß sind. Die Transportscheiben tragenden Staurollen 27 sind nichtparallel angeordnet, die Drehachsen schneiden sich in einem Punkt in der Nähe des Kurvenmittelpunktes. Wenn die Staurollen 27 alle in einer horizontalen Ebene angeordnet sind, ergibt sich für die zu transportierenden Teile 20 auf Grund der unterschiedlichen Durchmesser der Transportscheiben 15 eine geneigte Lage. Ist dieses unerwünscht, können, wie in der Fig. 6 dargestellt, die Staurollen entsprechend schräg gelegt werden. Zur seitlichen Führung der Teile 20 sind an den hier gekrümmt ausgeführten Schienen 2 seitenführungen 28 angeordnet, die ein Verrutschen der Teile 20 verhindern.

Das kurvengängige Ausführungsbeispiel arbeitet analog zu dem obenstehend beschriebenen nach Fig. 1. Wiederum geschieht der Transport durch überlappendes Laufen der mit entsprechenden Ausnehmungen 19 versehenen Transportscheiben 15. Durch die winklige Anordnung der Staurollen 27 wird das zu transportierende Teil 20 kontinuierlich im Bogen laufend um die Kurve transportiert. Die Seitenführung 28 gewährleistet die Beibehaltung der Transportlage.

Es ist ohne weiteres ersichtlich, daß die Zahl der Wellen 6 oder Hohlwellen 22 der beiden beschriebenen Ausführungsbeispiele entsprechend den konkreten Erfordernissen insbesondere hinsichtlich der Länge der Förderbahn 1 angepaßt werden kann. Eine prinzipbedingte Beschränkung der Anzahl der Wellen 6 oder Staurollen 27 auf ein bestimmtes Maximum gibt es nicht. Durch Auswechseln der Transportscheiben 15 ist die Förderbahn 1 ausgehend von einer Standartvariante auch für verschiedene Einsatzfälle anpaßbar.

Bei den obigen Ausführungsbeispielen weisen die Transportscheiben 15 jeweils drei in gleichmäßigen Winkelabständen angeordnete etwa halbkreisförmige Ausnehmungen 19 auf. In Ausgestaltung der Erfindung können verschiedenen Erfordernissen entsprechend auch mehr oder weniger Ausnehmungen 19 in den Transportscheiben vorgesehen sein. Die Gestalt der Ausnehmungen kann erforderlichenfalls von der Halbkreisform abweichen und den aufzunehmenden Teilen angepaßt sein.

Aus praktischen Erfordernissen, beispielsweise zum Transport miteinander verbundener Teile kann es notwendig sein, daß die Transportscheiben 15 gruppenweise synchron laufen. Das wird erreicht, indem die den jeweiligen Gruppen zugehörigen Wellen 6 ohne Schlupf mit der Antriebseinrichtung verbunden werden, die ihrerseits über ein drehmomentbegrenzendes Mittel angetrieben ist.

## Patentansprüche

1. Förderbahn zum staudruckfreien Transport runder oder rundähnlicher Teile (20), mit wenigstens einem Antriebsmittel, bei der entlang der Förderbahn (1) Transportscheiben (15), die an ihrer äußeren Umfangsfläche wenigstens eine Ausnehmung (19) aufweisen, um quer zu der Förderbahn (1) liegende Drehachsen drehbar gelagert angeordnet sind, wobei die Transportscheiben (15) über drehmomentbegrenzende Einrichtungen (11) mit dem Antriebsmittel (10, 13) verbunden und zur Übergabe eines runden oder rundähnlichen Teiles (20) aus einer Ausnehmung (19) einer Transportscheibe (15) in eine Ausnehmung (19) einer nächstfolgenden Transportscheibe (15) eingerichtet sind, dadurch gekennzeichnet, daß die Transportscheiben (15) von dem Antriebsmittel (10, 13) gleichsinnig und kontinuierlich angetrieben sind und daß ein bei der Übergabe von einer zu einer nächstfolgenden Transportscheibe (15) erforderliches Stillsetzen dieser einen Transportscheibe (15) durch das gegen die äußere Umfangsfläche der nächstfolgenden Transportscheibe (15) anlaufende runde oder rundähnliche Teil (20) und die drehmomentbegrenzenden Einrichtungen (11) herbeiführbar ist.

2. Förderbahn nach Anspruch 1, dadurch gekennzeichnet, daß in Transportrichtung aufeinanderfolgende Transportscheiben (15) einander überlappend angeordnet sind.

3. Förderbahn nach Anspruch 1, dadurch gekennzeichnet, daß die an dem Umfang der Transportscheiben (15) angeordneten Ausnehmungen (19) im wesentlichen halbkreisförmig sind.

4. Förderbahn nach Anspruch 1, dadurch gekennzeichnet, daß die Transportscheiben (15) jeweils paarweise axial einander zugeordnet und im Abstand voneinander angeordnet sind.

5. Förderbahn nach Anspruch 1, dadurch gekennzeichnet, daß die koaxial zu jeweils einer gemeinsamen Drehachse angeordneten Transportscheiben (15) in demselben Abstand zueinander angeordnet sind wie die Transportscheiben (15) auf der jeweils übernächsten Drehachse.

6. Förderbahn nach Anspruch 1, dadurch gekennzeichnet, daß die Transportscheiben (15) entlang der Förderbahn (1) in gleichen Abständen angeordnet sind.

7. Förderbahn nach Anspruch 1, dadurch gekennzeichnet, daß die zueinander koaxialen Transportscheiben (15) jeweils auf einer gemeinsamen in einem Förderbahngerüst (3) drehbar gelagerten Welle (6) angeordnet und mit dieser drehfest verbunden sind.

8. Förderbahn nach den Ansprüchen 1 und 7, dadurch gekennzeichnet, daß jede Welle (6) über die drehmomentbegrenzende Einrichtung (11) mit einem gemeinsamen oder einem eigenen Antriebsmittel (10,13) verbunden ist.

9. Förderbahn nach den Ansprüchen 1, 7 und 8, dadurch gekennzeichnet, daß die drehmomentbegrenzende Einrichtung (11) an einem frei zugänglichen Ende jeder Welle (6) angeordnet ist.

10. Förderbahn nach Anspruch 7, dadurch gekennzeichnet, daß die Welle (6) als Hohlwelle (22) in der Art einer Staurolle (27) derart ausgebildet ist, daß koaxial durch die Hohlwelle (22) eine in dem Förderbahngerüst (3) gelagerte und mit dem Antriebsmittel (10,13) verbundene Antriebswelle (3) durchgeht, die mit der Hohlwelle (22) über die drehmomentbegrenzende Einrichtung (11) verbunden ist.

11. Förderbahn nach Anspruch 10, dadurch gekennzeichnet, daß die drehmomentbegrenzende Einrichtung (11) an einem Ende der Hohlwelle (22) angeordnet ist.

12. Förderbahn nach einem der Ansprüche 7 bis 11, dadurch gekennzeichnet, daß die drehmomentbegrenzende Einrichtung (11) bezüglich des maximal übertragbaren Drehmomentes einstellbar ausgebildet ist.

13. Förderbahn nach einem der Ansprüche 7 bis 12, dadurch gekennzeichnet, daß die drehmomentbegrenzende Einrichtung (11) eine Rutschkupplung (11) ist.

14. Förderbahn nach Anspruch 1, dadurch gekennzeichnet, daß bei gerade ausgebildeter Förderbahn (1) die Drehachsen der Transportscheiben (15) zueinander parallel sind.

15. Förderbahn nach den Ansprüchen 1 und 14, dadurch gekennzeichnet, daß die jeweils paarweise einander zugeordneten koaxialen Transportscheiben (15) einen gleichen Durchmesser aufweisen.

16. Förderbahn nach Anspruch 1, dadurch gekennzeichnet, daß bei der eine Kurve beschreibend ausgebildeten Förderbahn (1) die Drehachsen schräg zueinander verlaufen.

17. Förderbahn nach Anspruch 16, dadurch gekennzeichnet, daß die paarweise einander zugeordneten koaxialen Transportscheiben (15) einen unterschiedlichen Durchmesser aufweisen, derart, daß der Durchmesser an der kurvenäußeren Seite größer als der an der kurveninneren Seite ist.

18. Förderbahn nach Anspruch 1, dadurch gekennzeichnet, daß die Transportscheiben (15) in ihrem Abstand zueinander verstellbar sind.

19. Förderbahn nach Anspruch 1, dadurch gekennzeichnet, daß die Transportscheiben (15) auswechselbar ausgebildet sind.

20. Förderbahn nach Anspruch 1, dadurch gekennzeichnet, daß die Transportscheiben (15) gruppenweise synchron angetrieben sind.

## Claims

1. Conveyor track for transporting round or similarly shaped parts (20) without compression, having at least one drive means, wherein transport discs (15) with at least one recess (19) on their outer peripheral surface are arranged along the conveyor track (1) to rotate around rotational axes lying transversely to the conveyor track (1), said transport discs (15) being connected via torque-limiting devices (11) to the drive means (10, 13) and being fitted for transfer of a round or similarly shaped part (20) from one recess (19) of a transport disc (15) into a recess (19) of a directly following transport disc (15), characterised in that the transport discs (15) are driven continuously and in the same direction by the drive means (10, 13); and that stoppage of this one transport disc (15) required during transfer from one transport disc to a directly following transport disc (15) may be brought about by the round or similarly shaped part (20) running against the outer peripheral surface of the directly following transport disc (15) and by the torque-limiting devices (11).

2. Conveyor track according to Claim 1, characterised in that consecutive transport discs (15) in transport direction are arranged to overlap one another.

3. Conveyor track according to Claim 1, characterised in that the recesses (19) arranged on the periphery of the transport discs (15) are essentially semi-circular.

4. Conveyor track according to Claim 1, characterised in that the transport discs (15) are respectively allocated to one another in pairs axial to one another and are arranged at a distance from one another.

5. Conveyor track according to Claim 1, characterised in that the transport discs (15) arranged coaxially to a respective common rotational axis are arranged at the same distance from one another as the transport discs (15) on the respective alternate rotational axis.

6. Conveyor track according to Claim 1, characterised in that the transport discs (15) are arranged at the same distances along the conveyor track (1).

7. Conveyor track according to Claim 1, characterised in that the transport discs (15) arranged coaxially to one another are each disposed on a common shaft (6) rotatably mounted in a conveyor track frame (3) and are connected thereto against rotation.

8. Conveyor track according to Claims 1 and 7, characterised in that each shaft (6) is connected to a common drive means or to its own drive means (10, 13) via the torque-limiting device (11).

9. Conveyor track according to Claims 1, 7 and 8, characterised in that the torque-limiting device (11) is arranged on a freely accessible end of each shaft (6).

10. Conveyor track according to Claim 7, characterised in that the shaft (6) is constructed as a hollow shaft (22) in the manner of a baffle roll (27) in such a way that a drive shaft (3) mounted in the conveyor track frame (3) and connected to the drive means (10, 13) passes coaxially through the hollow shaft (22), said drive shaft (3) being connected to the hollow shaft (22) via the torque-limiting device (11).

11. Conveyor track according to Claim 10, characterised in that the torque-limiting device (11) is arranged on one end of the hollow shaft (22).

12. Conveyor track according to one of Claims 7 to 11, characterised in that the torque-limiting device (11) is adjustable with respect to the maximum transmissible torque.

13. Conveyor track according to one of Claims 7 to 12, characterised in that the torque-limiting device (11) is a friction coupling (11).

14. Conveyor track according to Claim 1, characterised in that the rotational axes of the transport discs (15) are parallel to one another in the case of a straight conveyor track (1) construction.

15. Conveyor track according to Claims 1 and 14, characterised in that the coaxial transport discs (15) respectively allocated to one another in pairs have the same diameter.

16. Conveyor track according to Claim 1, characterised in that the rotational axes run obliquely to one another if the conveyor track (1) is constructed to follow a curve.

17. Conveyor track according to Claim 16, characterised in that the coaxial transport discs (15) allocated to one another in pairs have a different diameter so that the diameter on the outside of the curve is greater than that on the inside of the curve.

18. Conveyor track according to Claim 1, characterised in that the transport discs (15) may be adjusted in their distance from one another.

19. Conveyor track according to Claim 1, characterised in that the transport discs (15) are constructed to be replaceable.

20. Conveyor track according to Claim 1, characterised in that the transport discs (15) are driven synchronously in groups.

## Revendications

1. Chemin de transport pour transporter sans compression des pièces rondes ou similaires (20), avec au moins un mécanisme d'entraînement sur lequel des disques de transport (15), qui présentent sur leur surface périphérique extérieure au moins une encoche (19) sont montés à rotation autour d'axes de rotation disposés transversalement par rapport au chemin de transport (1), à l'occasion de quoi les disques de transport (15) sont reliés au mécanisme d'entraînement (10, 13) par l'intermédiaire de dispositifs (11) limitant le couple et sont agencés pour le transfert d'une pièce ronde (20) ou similaire à partir d'une encoche (19) d'un disque de transport (15) dans une encoche (19) d'un disque de transport (15) suivant, caractérisé en ce que les disques de transport (15) sont actionnés par le mécanisme d'entraînement (10, 13) dans le même sens et de manière continue et en ce qu'un arrêt de l'un de ces disques de transport (15), requis lors du transfert de ce disque de transport (15) au suivant, peut être causé par la pièce ronde ou similaire, abordant la surface périphérique extérieure du disque de transport suivant (15), ainsi que par les dispositifs (11) limitant le couple.

2. Chemin de transport selon la revendication 1, caractérisé en ce que des disques de transport (15) successifs dans le sens du transport sont disposés de manière à se chevaucher.

3. Chemin de transport selon la revendication 1, caractérisé en ce que les encoches (19) disposées sur la périphérie des disques de transport (15) sont en substance en forme de demi-cercle.

4. Chemin de transport selon la revendication 1, caractérisé en ce que les disques de transport (15) sont respectivement coordonnés axialement par paire et espacés l'un de l'autre.

5. Chemin de transport selon la revendication 1, caractérisé en ce que les disques de transport (15) disposés coaxialement par rapport à un axe de rotation commun sont disposés à la même distance l'un de l'autre que les disques de transport (15) sur l'axe de rotation qui suit l'axe de rotation respectivement suivant.

6. Chemin de transport selon la revendication 1, caractérisé en ce que les disques de transport (15) sont disposés le long du chemin de transport (1) à égale distance.

7. Chemin de transport selon la revendication 1, caractérisé en ce que les disques de transport (15) coaxiaux l'un par rapport à l'autre sont disposés sur un arbre (6) commun monté à rotation dans un cadre de chemin de transport et reliés à cet arbre de façon solidaire en rotation.

8. Chemin de transport selon la revendication 1 et la revendication 7, caractérisé en ce que chaque arbre (6) est relié à un mécanisme d'entraînement (10, 13) commun ou propre par l'intermédiaire du dispositif limitant le couple (11).

9. Chemin de transport selon les revendications 1, 7 et 8, caractérisé en ce que le dispositif limitant le couple (11) est disposé sur une extrémité librement accessible de chaque arbre (6).

10. Chemin de transport selon la revendication 7, caractérisé en ce que l'arbre (6) est conçu comme un arbre creux (22) à la manière d'un rouleau de retenue (27) de telle sorte qu'un arbre de commande (3) monté dans le cadre (3) du chemin de transport, relié au dispositif d'entraînement (10, 13) et relié à l'arbre creux (22) par l'intermédiaire du dispositif limitant le couple (11), passe coaxialement par l'arbre creux (22).

11. Chemin de transport selon la revendication 10, caractérisé en ce que le dispositif limitant le couple (11) est disposé à une extrémité de l'arbre creux (22).

12. Chemin de transport selon l'une quelconque des revendications 7 à 11, caractérisé en ce que le dispositif limitant le couple (11) est réglable en ce qui concerne le couple maximal pouvant être transmis.

13. Chemin de transport selon l'une quelconque des revendications 7 à 12, caractérisé en ce que le dispositif limitant le couple (11) est un accouplement à glissement (11).

14. Chemin de transport selon la revendication 1, caractérisé en ce que pour un chemin de transport (1) conçu droit, les axes de rotation des disques de transport (15) sont parallèles.

15. Chemin de transport selon les revendications 1 et 14, caractérisé en ce que les disques de transport (15) coaxiaux respectivement coordonnées par paire présentent un diamètre identique.

16. Chemin de transport selon la revendication 1, caractérisé en ce que pour le chemin de transport (1) conçu de manière à décrire une courbe, les axes de rotation sont en biais l'un par rapport à l'autre.

17. Chemin de transport selon la revendication 16, caractérisé en ce que les disques de transport (15) coaxiaux, coordonnés par paire présentent un diamètre différent de telle sorte que le diamètre du côté extérieur de la courbe soit plus grand que le diamètre du côté intérieur de la courbe.

18. Chemin de transport selon la revendication 1, caractérisé en ce que la distance entre les disques de transport (15) est réglable.

19. Chemin de transport selon la revendication 1, caractérisé en ce que les disques de transport (15) sont conçus de manière à être interchangeables.

20. Chemin de transport selon la revendication 1, caractérisé en ce que les disques de transport (15) sont commandés de manière synchrone en groupe.
